# EUROPEAN PATENT APPLICATION

(11) **EP 2 479 899 A1**
(43) Date of publication of application: **25.07.2012**
(21) Application number: 10815260.4
(22) Date of filing: 24.08.2010
(51) Int. Cl.: H04B 1/26, H04B 1/18

(54) **SEMICONDUCTOR INTEGRATED CIRCUIT AND RECEIVING APPARATUS**

(30) Priority: 14.09.2009 JP 2009211948
(71) Applicant: Mitsumi Electric Co., Ltd., Tama-shi Tokyo 206-8567 (JP)
(72) Inventor: YASHIMA, Kiminori, Tama-Shi Tokyo 206-8567 (JP)
(74) Representative: Collin, Jérôme
(86) International application number: PCT/JP2010/064256
(87) International publication number: WO 2011/030663

(57) **Abstract**

A receiving apparatus includes a first reception circuit to receive a radio wave of a first frequency band from a tuning circuit, a second reception circuit, including a first amplifier part, and to receive a radio wave of a second frequency band lower in frequency than the first frequency band, and a voltage generating circuit to generate a tuning voltage to be supplied to the tuning circuit in a first selection state in which the radio wave of the first frequency band is received, and a bias voltage to be supplied to the first amplifier part in a second selection state in which the radio wave of the second frequency band is received. The voltage generating circuit includes a voltage generator to generate and output the tuning voltage and the bias voltage to an output route, and a switching circuit to switch the output route to couple to the first amplifier circuit in the second selection state.

## Description

### TECHNICAL FIELD

The present invention relates to semiconductor integrated circuits and receiving apparatuses for receiving a high-frequency signal.

### BACKGROUND ART

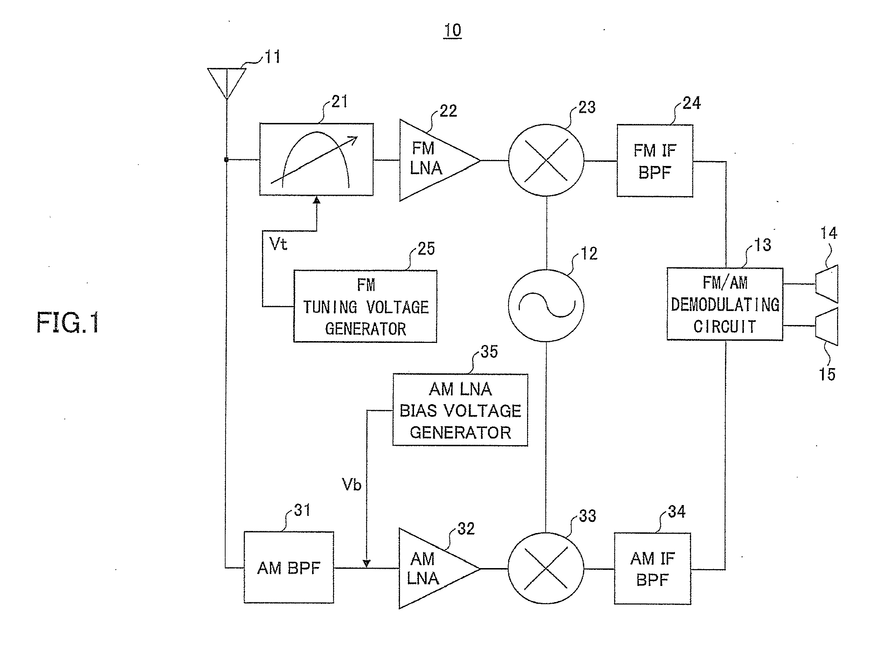

FIG. 1 is a block diagram illustrating an example of a structure of a conventional receiving apparatus. A receiving apparatus 10 includes a FM receiver and an AM receiver.

The FM receiver that receives FM radio waves such as FM broadcast bands from an antenna 11, includes a FM tuning circuit 21, a FM tuning voltage generator 25 to generate a tuning voltage Vt for controlling the FM tuning circuit 21, a FM Low Noise Amplifier (FM LNA) 22 to amplify an output signal of the FM tuning circuit 21, a FM mixer 23 to mix an output signal of the FM LNA 22 and a local oscillation frequency signal output from a FM/AM local oscillator circuit 12, and a FM Intermediate Frequency Band-Pass Filter (FM IF BPF) 24 to receive an output signal of the FM mixer 23.

In addition, the AM receiver that receives AM radio waves such as AM broadcast bands from the antenna 11, includes an AM Band-Pass Filter (AM BPF) 31, an AM Low Noise Amplifier (AM LNA) to amplify an output signal of the AM BPF 31, a bias voltage generator 35 to generate a bias voltage Vb of the AM LNA 32, an AM mixer 33 to mix an output signal of the AM LNA 32 and the local oscillation frequency signal output from the FM/AM local oscillator circuit 12, and an AM Intermediate Frequency Band-Pass Filter (AM IF BPF) 34 to receive an output signal of the AM mixer 33.

A FM/AM demodulating circuit 13 selectively demodulates a FM reception signal output from the FM receiver and an AM reception signal output from the AM receiver. Each of Digital-to-Analog Converters (DACs) 14 and 15 converts a digital audio signal decoded by the FM/AM demodulating circuit 13, for example, into an analog audio signal that is output. The analog audio signal output from the DACs 14 and 15 is supplied to right and left speakers (not illustrated), for example.

As illustrated in FIG. 1, The bias voltage Vb of the AM LNA 32 that amplifies the AM high-frequency signal is supplied from the bias voltage generator 35 that is provided exclusively therefor. When forming the AM LNA 32 by an Integrated Circuit (IC) on-chip, that is, a semiconductor integrated circuit, a band gap voltage, a current mirror circuit, and the like are provided in order to suppress a variation of the bias voltage Vb. However, because characteristics of elements forming the AM LNA 32 depend on the manufacturing process of the semiconductor integrated circuit, a variation in the characteristic of the AM LNA 32 may not be suppressed by merely suppressing the variation of the bias voltage Vb.

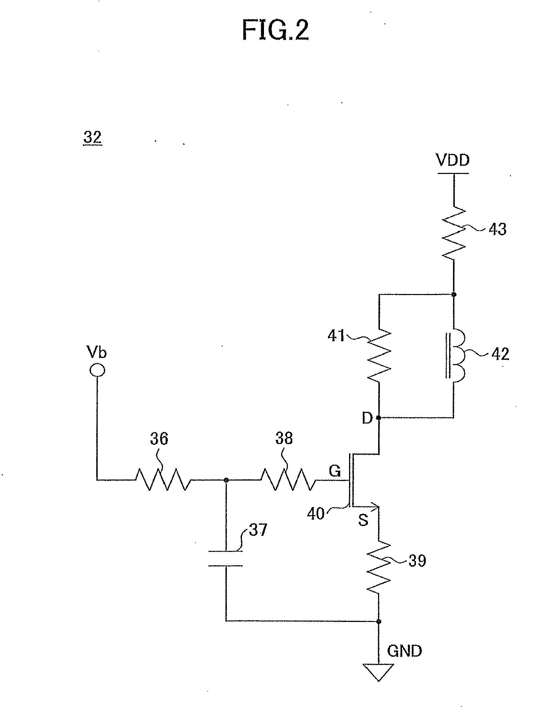

FIG. 2 is a circuit diagram illustrating an example of a structure of the AM LNA using an N-channel Metal Oxide Semiconductor Field Effect Transistor (MOSFET). The AM LNA 32 includes resistors 36, 38, 39, 31, and 43, a capacitor 37, an N-channel MOSFET 40, and a coil (or inductor or inductance element) 42 that are connected as illustrated in FIG. 2. In FIG. 2, VDD denotes a power supply voltage, GND denotes the ground, and Vb denotes the bias voltage. In addition, G, D, and S respectively denote a gate, a drain, and a source of the MOSFET 40.

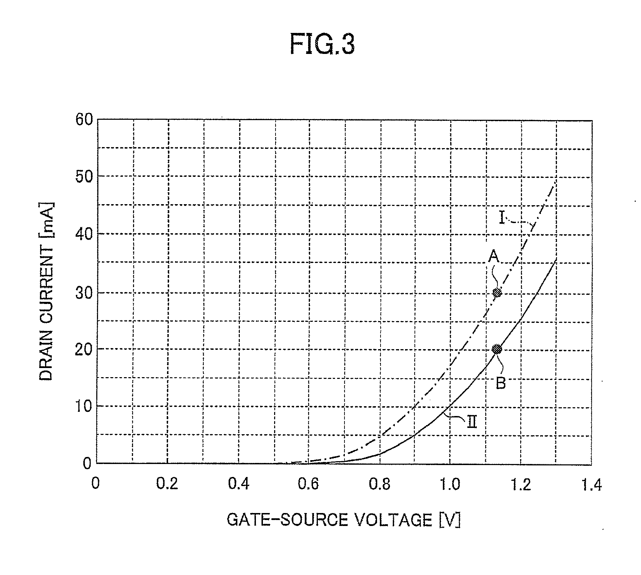

FIG. 3 is a diagram illustrating an example of a Direct Current (DC) characteristic of the N-channel MOSFET 40 of the AM LNA 32. In FIG. 3, the ordinate indicates a drain current [mA] of the N-channel MOSFET 40, and the abscissa indicates a gate-source voltage [V] of the N-channel MOSFET 40. As illustrated in FIG. 3, in the case of the N-channel MOSFET 40 having an amount of current supply approximately at a design center value, the drain current of 30 mA flows when the gate-source voltage is 1.13 V, for example, as indicated at a point A on a characteristic I indicated by a one-dot chain line. On the other hand, when the characteristics of the elements such as the MOSFET 40 forming the AM LNA 32 vary due to the variation introduced during the manufacturing process of the semiconductor integrated circuit, and the amount of current supply of the MOSFET 40 is less than the approximate design center value, the drain current of 20 mA flows when the gate-source voltage is 1.13 V, which is the same as that for the MOSFET 40 having the amount of current supply approximately at the design center value as described above, as indicated at a point B on a characteristic II indicated by a solid line. In other words, depending on the characteristics I and II of the element itself forming the AM LNA 32, the drain current variation is approximately 33% in the example illustrated in FIG. 3. For this reason, even when the variation in the bias voltage Vb supplied to the AM LNA 32 is suppressed, the variation is generated in the characteristic of the AM LNA 32 as a whole, such as the amplification factor, linearity, noise immunity or resistance to noise, and the like.

In order to suppress the variation of the characteristic of the AM LNA 32, it may be conceivable to variably control the bias voltage Vb, rather than fixing the bias voltage Vb approximately constant, in order to absorb the variation in the characteristic of the AM LNA 32. For example, a bias voltage adjusting circuit has been proposed in a Patent Document 1.

### PRIOR ART DOCUMENTS

### PATENT DOCUMENT

Patent Document 1: Japanese Laid-Open Patent Publication No.2001-217654

### DISCLOSURE OF THE INVENTION

### PROBLEM TO BE SOLVED BY THE INVENTION

However, when the exclusive bias voltage generator 35 illustrated in FIG. 1 is configured to variably control the bias voltage Vb output therefrom, the circuit structure of the bias voltage generator 35 becomes complex, and the circuit scale and cost of the bias voltage generator 35 increase. In addition, when the bias voltage adjusting circuit is provided separately as proposed in the Patent Document 1, the circuit structure may also become complex, and the circuit scale and cost may also increase.

Hence, one object of the present invention is to provide a semiconductor integrated circuit and a receiving apparatus which may suppress the variation in the characteristic of an amplifier part without increasing the circuit scale.

### MEANS OF SOLVING THE PROBLEM

According to one aspect of the present invention, a semiconductor integrated circuit may include a first reception circuit configured to receive a radio wave of a first frequency band from a tuning circuit; a second reception circuit, including a first amplifier part, and configured to receive a radio wave of a second frequency band lower in frequency than the first frequency band; and a voltage generating means for generating a tuning voltage to be supplied to the tuning circuit in a first selection state in which the radio wave of the first frequency band is received, and a bias voltage to be supplied to the first amplifier part in a second selection state in which the radio wave of the second frequency band is received, wherein the voltage generating means includes a voltage generator configured to generate and output the tuning voltage and the bias voltage to an output route, and a switching circuit configured to switch the output route to couple to the first amplifier circuit in the second selection state.

According to one aspect of the present invention, a receiving apparatus may include a first reception circuit configured to receive a radio wave of a first frequency band from a tuning circuit; a second reception circuit, including a first amplifier part, and configured to receive a radio wave of a second frequency band lower in frequency than the first frequency band; and a voltage generating means for generating a tuning voltage to be supplied to the tuning circuit in a first selection state in which the radio wave of the first frequency band is received, and a bias voltage to be supplied to the first amplifier part in a second selection state in which the radio wave of the second frequency band is received, wherein the voltage generating means includes a voltage generator configured to generate and output the tuning voltage and the bias voltage to an output route, and a switching circuit configured to switch the output route to couple to the first amplifier circuit in the second selection state.

### EFFECTS OF THE INVENTION

According to the present invention, it is possible to provide a semiconductor integrated circuit and a receiving apparatus which may suppress the variation in the characteristic of the amplifier part without increasing the circuit scale.

### BRIEF DESCRIPTION OF THE DRAWING

FIG. 1 is a block diagram illustrating an example of a structure of a conventional receiving apparatus;
FIG. 2 is a circuit diagram illustrating an example of a structure of an AM LNA using an N-channel MOSFET;
FIG. 3 is a diagram illustrating an example of a DC characteristic of the N-channel MOSFET of the AM LNA;
FIG. 4 is a block diagram illustrating an example of a structure of a receiving apparatus in one embodiment of the present invention;
FIG. 5 is a diagram illustrating an example of a structure of a FM tuning circuit, a voltage generator, and an AM low noise amplifier;
FIG. 6 is a diagram illustrating an example of a DC characteristic of an N-channel MOSFET in the AM low noise amplifier; and
FIG. 7 is a block diagram illustrating an example of a structure of a temperature compensation circuit.

### MODE OF CARRYING OUT THE INVENTION

A description will be given of embodiments of the semiconductor integrated circuit and the receiving apparatus, by referring to the drawings.

### EMBODIMENTS

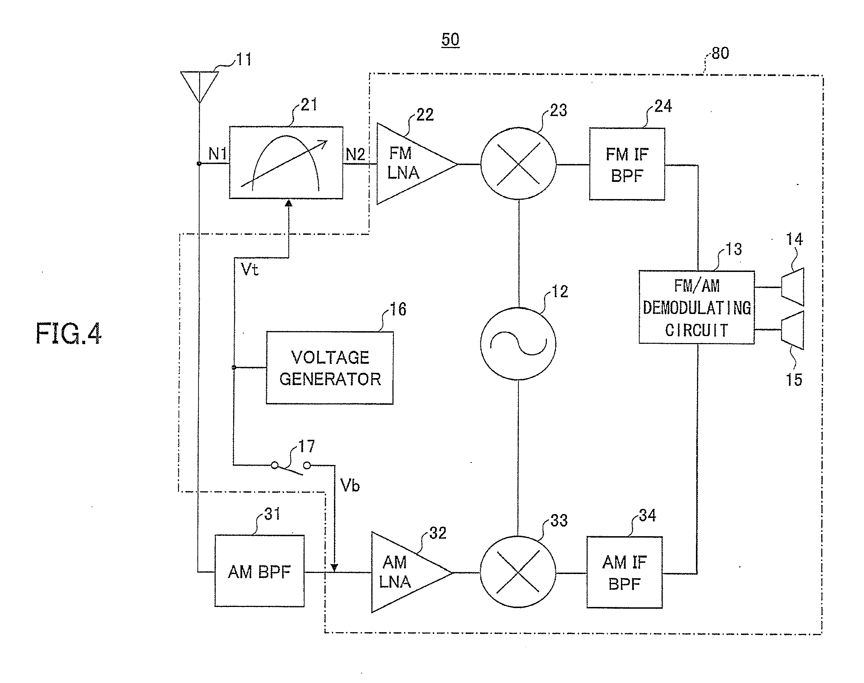

FIG. 4 is a block diagram illustrating an example of a structure of a receiving apparatus in one embodiment of the present invention. In FIG. 4, those parts that are substantially the same as those corresponding parts in FIG. 1 are designated by the same reference numerals, and a description thereof will be omitted.

A receiving apparatus 50 includes a first receiver circuit that receives radio waves in a first frequency band, and a second receiver circuit that receives radio waves in a second frequency band lower in frequency that the first frequency band. For example, the radio waves in the first frequency band are high-frequency signals in a FM broadcast band (or FM signals), and the radio waves in the second frequency band are AM signals in an AM broadcast band. In this example, the receiving apparatus 50 is formed by a superheterodyne receiving apparatus that selectively uses the first receiver circuit and the second receiver circuit.

The first receiver circuit includes a FM tuning circuit 21 that includes a variable capacitance element, an inductance element, and the like and selectively receives the high-frequency signal, a FM Low Noise Amplifier (FM LNA) 22 that forms a first amplifier part to amplify the high-frequency signal and output a first amplified signal, and a first frequency converter part that frequency-converts the first amplified signal output from the FM LNA 22 into a first Intermediate Frequency (IF) signal. In the example illustrated in FIG. 4, the first frequency converter part includes a FM mixer 23 forming a first mixer of the FM receiving end.

The second receiver circuit includes an AM Low Noise Amplifier (AM LNA) 32 that forms a second amplifier part to amplify the high-frequency signal and outputs a second amplified signal, and a second frequency converter part that frequency-converts the second amplified signal output from the AM LNA 32 into a second Intermediate Frequency (IF) signal. In the example illustrated in FIG. 4, the second frequency converter part includes an AM mixer 34 forming a second mixer of the AM receiving end.

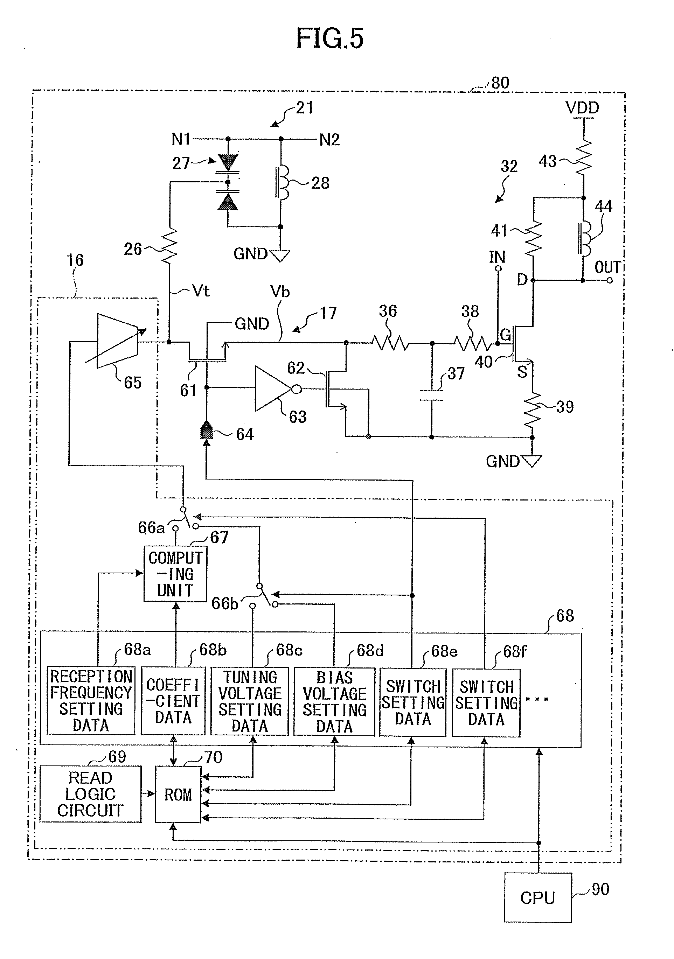

In the example illustrated in FIG. 4, the receiving apparatus 50 includes an antenna 11, the FM tuning circuit 21, an AM Band-Pass Filter (AM BPF) 31, and a semiconductor integrated circuit (or IC chip) 80. The IC chip 80 includes the FM LNA 22, the first frequency converter part, the second receiver circuit, and a voltage generator 16. The voltage generator includes a tuning voltage generator and a bias voltage generator. The tuning voltage generator generates a tuning voltage Vt for controlling a tuning operation of the FM tuning circuit 21 that is provided at a stage preceding the FM LNA 22. For example, the tuning voltage generator may generate the tuning voltage Vt by subjecting a tuning voltage setting data that is set to a Digital-to-Analog (D/A) conversion. The bias voltage generator generates a bias voltage Vb for determining the characteristic of the AM LNA 32. For example, the bias voltage generator may generate the bias voltage Vb by subjecting a bias voltage setting data that is set to a Digital-to-Analog (D/A) conversion. For example, the tuning voltage generator and the bias voltage generator may perform the D/A conversion by alternately using the same Digital-to-Analog Converter (DAC) 65, as will be described later in conjunction with FIG. 5.

The antenna 11 may be separate from the receiving apparatus 50.

Because the receiving apparatus 50 and the IC chip 80 have the structures described above, the bias voltage Vb input to the AM LNA 32 may be varied without increasing the circuit scale, and the variation in the characteristic of the AM LNA 32 may be suppressed.

In other words, in a first selection state in which the first receiver circuit is used and the second receiver circuit is not used, the bias voltage generator within the voltage generator 16 does not need to perform the process of subjecting the bias voltage setting data that sets the bias voltage Vb for determining the characteristic of the AM LNA 32 to the D/A conversion by the DAC 65 in order to generate the bias voltage Vb. For this reason, the tuning voltage generator within the voltage generator 16 may perform the process of subjecting the tuning voltage setting data that sets the tuning voltage Vt for controlling the tuning operation of the FM tuning circuit 21 to the D/A conversion by the DAC 65 in order to generate the tuning voltage Vt.

On the other hand, in a second selection state in which the first receiver circuit is not used and the second receiver circuit is used, the tuning voltage generator within the voltage generator 16 does not need to perform the process of subjecting the tuning voltage setting data that sets the tuning voltage Vt for controlling the tuning operation of the FM tuning circuit 21 to the D/A conversion by the DAC 65 in order to generate the tuning voltage Vt. For this reason, the bias voltage generator within the voltage generator 16 may perform the process of subjecting the bias voltage setting data that sets the bias voltage Vb for determining the characteristic of the AM LNA 32 to the D/A conversion by the DAC 65 in order to generate the bias voltage Vb.

In other words, the tuning voltage generator and the bias voltage generator of the voltage generator 16 may share the DAC 65 and use the same DAC 65 when performing the D/A conversion. Hence, the D/A conversion performed by the tuning voltage generator in the first selection state and the D/A conversion performed by the bias voltage generator in the second selection state do not require separate DACs to perform the D/A conversions, and thus, an increase in the circuit scale of the voltage generator 16 may be suppressed. Hence, the circuit structure of the voltage generator 16 may become relatively simple, and the variation in the characteristic of the amplifier part that amplifies the high-frequency signal may be suppressed without increasing the circuit scale or the cost.

In addition, even when a variation is generated in the characteristic of the internal circuit of the AM LNA 32, the bias voltage generator of the voltage generator 16 may vary the bias voltage Vb of the AM LNA 32 by the bias voltage setting data that is input to the DAC 65, in order to adjust the characteristic of the AM LNA 32 to a desired optimum value.

Next, a more detailed description will be given of the structure of the receiving apparatus 50 illustrated in FIG. 4. The IC chip 80 includes a circuit or means to switch between the first selection state and the second selection state. In this example, the IC chip 80 includes a switching circuit 17 to selectively switch the state between the first selection state and the second selection state. The voltage generator 16 and the switching circuit 17 may form a voltage generating means for supplying the tuning voltage Vt to the FM tuning circuit 21 of the first receiver circuit in the first selection state, and supplying the bias voltage Vb to the AM LNA 32 of the second receiver circuit in the second selection state.

The receiving apparatus 60 includes the antenna 11, a FM receiver part to receive FM radio waves such as the FM broadcast band by the antenna 11, an AM receiver part to receive AM radio waves such as the AM broadcast band by the antenna 11, and a demodulating circuit 13 capable of selectively demodulating a FM reception signal output from the FM receiver part and an AM reception signal output from the AM receiver part. The FM receiver part includes the FM tuning circuit 21 that receives the high-frequency signal from the antenna 11, the FM LNA 22, the FM mixer 23, and the FM IF BPF 24. The AM receiver part includes the AM BPF 31 that receives the high-frequency signal from the antenna 11, the AM LNA 32, the AM mixer 33, and the AM IF BPF 34.

The FM tuning circuit 21 performs a tuning operation to obtain the high-frequency signal of the FM broadcast band to be received, from the high-frequency signal from the antenna 11. The FM tuning circuit 21 may vary the frequency band of a signal component obtained from the high-frequency signal from the antenna 11, based on the tuning voltage Vt input thereto. In other words, the FM tuning circuit 21 may obtain the signal component of the frequency band according to the tuning voltage Vt, from the high-frequency signal from the antenna 11. The FM LNA 22 outputs the first amplified signal by amplifying the high-frequency signal from the FM tuning circuit 21 by a predetermined amplification factor. The FM mixer 23 mixes the first amplified signal output from the FM LNA 22 and the local oscillation frequency signal output from the FM/AM local oscillator circuit 12, and outputs the first IF signal. The FM/AM local oscillator circuit 12 may be divided into a FM side local oscillator circuit and an AM side local oscillator circuit. The IF BPF 24 obtains a signal component of a desired band (or channel) from the first IF signal output from the FM mixer 23.

The AM BPF 31 performs a band limiting operation to obtain a high-frequency signal of the AM broadcast band to be received, from the high-frequency signal from the antenna 11. The AM LNA 32 outputs the second amplified signal by amplifying the high-frequency signal from the AM BPF 31 by a predetermined amplification factor. The AM mixer 33 mixes the second amplified signal output from the AM LNA 32 and the local oscillation frequency signal output from the FM/AM local oscillator circuit 12, and outputs the second IF signal. The AM IF BPF 34 obtains a signal component of a desired band (or channel) from the second IF signal output from the AM mixer 33.

In this example, the FM/AM demodulating circuit 13 decodes a filtered output signal of the FM IF BPF 24 or the AM IF BPD 34 into a monophonic signal or into right stereo signal and a left stereo signal. The DACs 14 and 15 convert the digital audio signal decoded by the FM/AM demodulating circuit 13 into the analog audio signal.

Of course, the IC chip 80 may be constructed to include at least one of the FM tuning circuit 21 and the AM BPF 31.

FIG. 5 is a diagram illustrating an example of a structure of the FM tuning circuit 21, the voltage generator 16, and the AM LNA 32. In FIG. 5, those parts that are substantially the same as those corresponding parts in FIG. 2 are designated by the same reference numerals, and a description thereof will be omitted.

In FIG. 5, the FM tuning circuit 21 includes a parallel circuit that includes a diode 27 and a coil (or inductor element) 28, and a resistor 26 to supply the tuning voltage Vt to an intermediate terminal of the diode 27. N1 denotes an input to the FM tuning circuit 21 illustrated in FIG. 4, and N2 denotes an output of the FM tuning circuit 21 illustrated in FIG. 4. The diode 27 is a variable capacitance element having a node that connects cathodes of two variable capacitance diodes as the intermediate terminal. In this example, the FM tuning circuit 21 is provided inside the IC chip 80, however, a part or all of the FM tuning circuit 21 may be provided outside the IC chip 80.

The AN LNA 32 includes an N-channel MOSFET 40, a gate bias circuit to supply the bias voltage Vb to a gate G of the FET 40, a resistor 39 connected between a source S of the FET 40 and the ground GND, and an output load circuit connected between a drain D of the FET 40 and the power supply voltage VDD. The gate bias circuit includes a resistor 36, a resistor 38 connected to the gate G of the FET 40, and a capacitor 37 connected between the ground GND and a node connecting the resistors 36 and 38. The output load circuit includes a parallel circuit that includes a resistor 41 and a coil (or inductor element) 44, and a resistor 43 connected in series to this parallel circuit. For example, the resistor and the output load circuit may be provided outside the IC chip 80. In other words, the AM LNA 32 is provided inside the IC chip 80 in this example, however, a part or all of the AM LNA 32 may be provided outside the IC chip 80.

The second amplified signal output from the AM LNA 32 is output from the drain of the FET 40 to an output terminal OUT. In addition, the high-frequency signal input to the AM LNA 32 from the AM BPF 31 illustrated in FIG. 4 is input from an input terminal IN to the gate G of the FET 40.

The voltage generator 16 includes a single-input single-output D/A converter (DAC) 65. In addition, the voltage generator 16 includes, as a setting circuit or setting means for setting an analog output voltage of the DAC 65, switches 66a and 66b, a computing unit 67 to output digital data to the DAC 65, a register part 68 to store the digital data, a Read Only Memory (ROM) 70 to store the digital data, and a read logic circuit 69 to read the digital data from the ROM 70 and output the digital data to the register part 68. The switches 66a and 66b may form a switching means. The computing unit 67 and the read logic circuit 69 may be formed by a hardware circuit, such as a hard Intellectual Property (IP) or the like. In addition, a rewritable read only memory may be used for the ROM 70, and for example, Electrically Erasable Programmable ROM (EEPROM), a flash memory, and the like may also be used for the ROM 70.

In this example, a Central Processing Unit (CPU) 90 which will be described later is provided outside the IC chip 80, and is connectable to the voltage generator 16. The CPU 90 may be included in the receiving apparatus 50. The ROM 70 and the read logic circuit 69 may form a storage means capable of setting the data rewritably stored in the ROM 70 to the register part 68 in response to an instruction from the CPU 90.

The output of the DAC 65 is supplied, as a reverse voltage, to the variable capacitance diode 27 of the FM tuning circuit 21 via the resistor 26. The variable capacitance diode 27 is the variable capacitance element having a capacitance that varies depending on the reverse voltage. The variable capacitance diode 27 forms a variable frequency Band-Pass Filter (BPF) by resonating with the coil (or inductor element) 28 connected in parallel thereto, in order to select and pass the high-frequency signal of the FM broadcast band. In other words, a tuning frequency of the FM tuning circuit 21 is controlled depending on the output voltage of the DAC 65 that varies with respect to the tuning voltage setting data that is input.

The switching circuit 17 is provided between an output part of the DAC 65 and the gate bias circuit of the FET 40, in order to selectively switch a supplying destination of the analog output voltage of the DAC 65 to the FM tuning circuit 21 or the AM LNA 32. The switching circuit 17 includes switches 61 and 62, an inverter 63, and an input terminal 64 to receive a switching signal for switching the supplying destination of the analog output voltage of the DAC 65. For example, the switches 61 and 62 may be formed by an N-channel MOSFET, a bipolar transistor, or the like.

At the time of the FM wave reception, that is, in the first selection state in which the use of the first receiver circuit is selected and the use of the second receiver circuit is not selected, the terminal 64 is set to a low-level voltage by the switching signal. As a result, the switch 61 opens and the switch 62 closes, the gate voltage of the FET 40 of the AM LNA 32 is set to the potential of the ground GND, and thus, the drain current of the FET 40 does not flow. The output voltage of the DAC 65 in this first selection state is supplied as the tuning voltage Vt of the FM tuning circuit 21.

On the other hand, at the time of the AM wave reception, that is, in the second selection state in which the use of the second receiver circuit is selected and the use of the first receiver circuit is not selected, the terminal 64 is set to a high-level voltage by the switching signal. As a result, the switch 61 closes and the switch 62 opens, and the output voltage of the DAC 65 in this second selection state is supplied as the bias voltage Vb of the AM LNA 32. A voltage is supplied to the gate G of the FET 40 by this bias voltage Vb, and a drain current flows to the FET 40.

Accordingly, by changing the digital data that is input to the DAC 65 in the second selection state to the bias voltage setting data capable of adjusting the characteristic data of the AM LNA 32 within each of the individual IC chips 80 to fall within a predetermined specification range, instead of inputting the tuning voltage setting data, the characteristic data of the AM LNA 32 may be adjusted to fall within the predetermined specification range even when a variation is generated in the internal circuit of the AM LNA 32 amongst the individual IC chips 80. In other words, because the analog output voltage of the DAC 65 (that is, the bias voltage Vb of the AM LNA 32) may be adjusted depending on the input value of the bias voltage setting data that is input to the DAC 65, the drain current of the FET 40 that affects the characteristic of the AM LNA 32 may be adjusted to a desired optimum value. That is, an offset may be provided to the gate voltage that is applied to the gate G of the FET 40 in the AM LNA 32.

The bias voltage setting data and the tuning voltage setting data input to the DAC 65 and the switching signal input to the input terminal 64 change depending on the digital data stored in the register part 68. The digital data stored in the register part 68 is read from the ROM 70 by the read logic circuit 69. In this example, the register part 68 includes registers 68a through 68f.

For example, in an initial state before the IC chip 80 is forwarded, the characteristic adjusting data capable of adjusting the characteristic data of the AM LNA 32 within the individual IC chip 90 to fall within the predetermined specification range, that is, the offset data of the bias voltage Vb of the AM LNA 32, is not stored in the ROM 70. Hence, in the initial state, the CPU 90 sets the register part 68 to an AM reception mode in order to store the characteristic adjusting data in the ROM 70. More particularly, in the second selection state (that is, at the time of the AM wave reception), the CPU 90 sets the value of a switch setting data of the first switch setting register 68e and the value of a switch setting data of the second switch setting register 68f, in order to input a high-level voltage to the terminal 64 by the switching signal and to input the characteristic adjusting data stored in the bias voltage setting register 68d to the DAC 65 as the bias voltage setting data. The switch setting data to set a connecting destination of the switch 66b and the input voltage level of the terminal 64 is stored in the register 68e, and the switch setting data to set a connecting destination of the switch 66a is stored in the register 68f.

The bias voltage setting data to be input to the DAC 65 is stored in the register 68d. By storing the characteristic adjusting data stored in the ROM 70 into the register 68d, it becomes possible to input the bias voltage setting data to the DAC 65.

The CPU 90 adjusts the value of the bias voltage setting data in the bias voltage setting register 68d so that the bias voltage Vb of the AM LNA 32 falls within the predetermined specification range. For example, the CPU 90 adjusts the value of the bias voltage setting data in the bias voltage setting register 68d, so that a measured data obtained by measuring a predetermined output signal of the IP chip 80 in the second selection state falls within the predetermined specification range. The measurement of the output signal of the IC chip 80 and the adjustment of the value of the bias voltage setting data in the register 68d may be performed by a CPU of a testing apparatus (not illustrated) before the IC chip 80 is forwarded or, may be performed after the IC chip 80 is mounted in a product, such as the receiving apparatus 10, by a CPU of the product. Because the CPU 90 performs a control to write the value of the bias voltage setting data in the register 68d, that is adjusted to the optimum value, to the ROM 70 as the characteristic adjusting data, it is unnecessary for the ROM 70 to prestore the offset data of the bias voltage Vb.

For example, when the power of the IC chip 80 is turned ON or, when the IC chip 80 is reset (also including when the reset is cancelled), the read logic circuit 69 that operates in response to an internal control of the IC chip 80 performs a control to supply the characteristic adjusting data read from the ROM 70 to the register 86d in order to store the characteristic adjusting data written in the ROM 70 to the register 68d. By storing the characteristic adjusting data read from the ROM 70 to the register 68d when the power is turned ON or when the reset is made, it becomes unnecessary to transfer the characteristic adjusting data from the ROM 70 to the register 68d every time the reception is switched between the AM wave reception and the FM wave reception.

When making the AM wave reception in a state in which the characteristic adjusting data is stored in the ROM 70, the CPU 90 sets the register part 68 to the AM reception mode. Similarly as in the case in which the characteristic adjusting data is not stored in the ROM 70, the CPU 90 sets the value of the switch setting data of the first switch setting register 68e and the value of the switch setting data of the second switch setting register 68f, in order to input a high-level voltage to the terminal 64 by the switching signal and to input the characteristic adjusting data stored in the bias voltage setting register 68d to the DAC 65 as the bias voltage setting data.

On the other hand, when making the FM wave reception, the CPU 90 sets the register part 68 to the FM reception mode. More particularly, in the first selection state (that is, at the time of the FM wave reception), the CPU 90 sets the value of the switch setting data of the first switch setting register 68e and the value of the switch setting data of the second switch setting register 68f, in order to input a low-level voltage to the terminal 64 by the switching signal and to input the tuning voltage setting data computed by the computing unit 67 to the DAC 65. The computing unit 67 computes the tuning voltage setting data for selecting the radio wave of a receiving frequency, based on a reception frequency setting data stored in the register 68a and a coefficient data stored in the register 68b. The register 68a stores the reception frequency setting data indicating the frequency of the radio wave whose reception is selected. The register 68b stores the coefficient data of terms of a computing formula that is used to compute the tuning voltage setting data based on the reception frequency.

The register 68c stores the tuning voltage setting data to be input to the DAC 65. When the data of the tuning voltage Vt of the FM tuning circuit 21 is stored in the ROM 70, the tuning voltage setting data may be input to the DAC 65 by storing the characteristic adjusting data stored in the ROM 70 to the register 68c. In this case, the tuning voltage setting data from the register 68c, and not the computing unit 67, may be input to the DAC 65.

Similarly to the case described above, when the coefficient data read from the ROM 70 is stored in the register 68b when the power is turned ON or when the reset is made, it becomes unnecessary to transfer the coefficient data from the ROM 70 to the register 68b every time the reception is switched between the AM wave reception and the FM wave reception.

Therefore, according to this embodiment, the drain current of the FET 40 of the AM LNA 32 may be adjusted by changing the gate bias voltage of the FET 40 by the digital data input to the DAC 65.

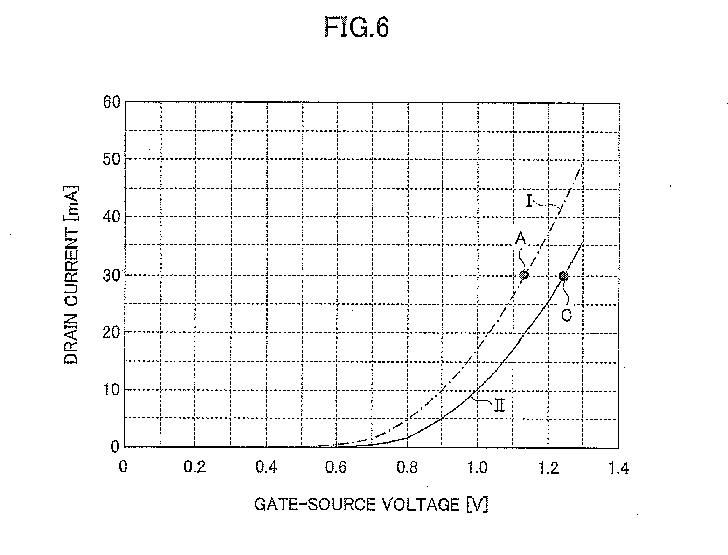

FIG. 6 is a diagram illustrating an example of a DC characteristic of the N-channel MOSFET 40 in the AM LNA 32 illustrated in FIG. 5. In FIG. 6, the ordinate indicates the drain current [mA] of the FET 40, and the abscissa indicates the gate-source voltage [V] of the FET 40. In FIG. 6, those parts that are the same as those corresponding parts in FIG. 3 are designated by the same reference numerals, and a description thereof will be omitted.

As illustrated in FIG. 6, in the case of the FET 40 having the amount of current supply approximately at the design center value, the drain current of 30 mA flows when the gate-source voltage is 1.13 V, for example, as indicated at a point A on a characteristic I indicated by a one-dot chain line. On the other hand, when the characteristics of the elements such as the FET 40 forming the AM LNA 32 vary due to the variation introduced during the manufacturing process of the IC chip 80, and the amount of current supply of the FET 40 is less than the approximate design center value, a relationship between the drain current and the gate-source voltage of the FET 40 becomes a characteristic II indicated by a solid line. However, in this embodiment, an appropriate digital data is input to the DAC 65 so that the gate-source voltage of the FET 40 becomes 1.24 V, for example. As a result, the gate bias voltage of the FET 40 is set based on the output of the DAC 65, and the drain current of the FET 40 may be adjusted to 30 mA as indicated by a point C on the characteristic II, which is the same as the drain current at the point A on the characteristic I. Accordingly, even when the characteristic of the AM LNA 32 varies due to the variation introduced during the manufacturing process of the IC chip 80, the variation in the characteristic of the AM LNA 32 may be absorbed.

In addition, in this embodiment, a voltage output route of the DAC 65 that generates the tuning voltage Vt to be supplied to the FM tuning circuit 21 is connectable to the AM LNA 32 via the switching circuit 17 in the second selection state. For this reason, the output voltage of the DAC 65 may be used as the bias voltage Vb of the AM LNA 32, and it is unnecessary to provide an exclusive bias circuit for supplying the bias voltage Vb to the AM LNA 32. In the example illustrated in FIG. 5, the switching circuit 17 that make the voltage output route of the DAC 65 connectable to the AM LNA 32 may be formed by a circuit having a relatively simple circuit structure including two switches 61 and 62 and one inverter 63. In addition, the voltage generator 16 may be formed by a circuit having a relatively simple circuit structure including the computing unit 67 and the register part 68. Accordingly, the variation in the characteristic of the AM LNA 32 due to the variation introduced during the manufacturing process of the IC chip 80 may be suppressed without increasing the circuit scale and the cost of the IC chip 80.

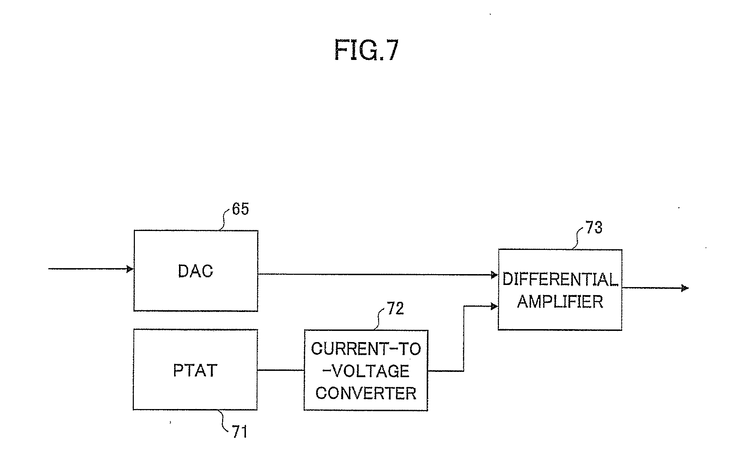

FIG. 7 is a block diagram illustrating an example of a structure of a temperature compensation circuit. In FIG. 7, the temperature compensation circuit that performs a temperature compensation on the bias voltage Vb includes a Proportional To Absolute Temperature (PTAT) circuit 71, a current-to-voltage converter 72, and a differential amplifier 73. The DAC 65 outputs the analog voltage that is linear with respect to the digital data input. The PTAT circuit 71 forms a current output means for outputting a current proportional to the absolute temperature. The current-to-voltage converter 72 converts an output current of the PTAT circuit 71 into a bias voltage Vb that takes into consideration the temperature characteristic of the AM LNA 32, based on temperature coefficients representing the temperature characteristic of the drain current of the AM LNA 32. The output voltage of the DAC 65 and the output voltage of the current-to-voltage converter 72 are input to the differential amplifier 73, and one is subtracted from the other in order to output the bias voltage Vb that is temperature compensated.

This application is based upon and claims the benefit of priority of the prior Japanese Patent Application No.2009-211948, filed on September 14, 2009, the entire contents of which are incorporated herein by reference.

Further, although the semiconductor integrated circuit and the receiving apparatus are described above with reference to the embodiments, the present invention is not limited to these embodiments, and various variations and modifications may be made without departing from the scope of the present invention.

### DESCRIPTION OF THE REFERENCE NUMERALS

- 11: Antenna
- 12: Local Oscillator Circuit
- 13: Demodulating Circuit
- 14, 15: DAC
- 16: Voltage Generator
- 17: Switching Circuit
- 21: FM Tuning Circuit
- 22: FM LNA
- 23: FM Mixer
- 24: FM IF BPF
- 31: AM BPF
- 32: AM LNA
- 33: AM Mixer
- 34: AM IF BPF
- 50: Receiving Apparatus

## Claims

1. A semiconductor integrated circuit comprising:
a first reception circuit configured to receive a radio wave of a first frequency band from a tuning circuit;
a second reception circuit, including a first amplifier part, and configured to receive a radio wave of a second frequency band lower in frequency than the first frequency band; and
a voltage generating means for generating a tuning voltage to be supplied to the tuning circuit in a first selection state in which the radio wave of the first frequency band is received, and a bias voltage to be supplied to the first amplifier part in a second selection state in which the radio wave of the second frequency band is received,
wherein the voltage generating means includes a voltage generator configured to generate and output the tuning voltage and the bias voltage to an output route, and a switching circuit configured to switch the output route to couple to the first amplifier circuit in the second selection state.

2. The semiconductor integrated circuit as claimed in claim 1, wherein
the voltage generator includes a register part including a plurality of registers configured to store data, a switching means for switching and outputting the data of the register part, and a digital-to-analog converter configured to output a voltage by subjecting output data of the switching means to a digital-to-analog conversion; and
the switching means outputs first data stored in a first register of the register part to the digital-to-analog converter in the first selection state in order to generate the tuning voltage, and outputs second data stored in a second register of the register part to the digital-to-analog converter in the second selection state in order to generate the bias voltage.

3. The semiconductor integrated circuit as claimed in claim 2, wherein the voltage generator further includes a computing unit configured to compute data based on third data stored in a third register of the register part in order to cause the digital-to-analog converter to generate the tuning voltage.

4. The semiconductor integrated circuit as claimed in claim 2 or 3, wherein the voltage generator includes a storage means rewritably prestoring the data to be stored in the register part, for setting the prestored data to the register part in response to an instruction.

5. The semiconductor integrated circuit as claimed in claim 4, wherein the storage means sets the prestored data to the register part when a power of the semiconductor integrated circuit is turned ON or when resetting the semiconductor integrated circuit.

6. The semiconductor integrated circuit as claimed in any of claims 1 to 5, wherein
the radio wave of the first frequency band is a FM broadcast wave, and the first reception circuit receives the radio wave received by an antenna via the tuning circuit; and
the radio wave of the second frequency band is an AM broadcast wave, and the second reception circuit receives the radio wave received by the antenna via a bandpass filter at the first amplifier part.

7. The semiconductor integrated circuit as claimed in claim 6, wherein
the first reception circuit includes a second amplifier part configured to amplify the radio wave of the first frequency band, and a first frequency converter configured to frequency-convert an output of the second amplifier part into a first intermediate frequency signal;
the second reception circuit frequency-converts an output of the first amplifier part into a second intermediate frequency signal;and
the semiconductor integrated circuit further comprises:
a demodulating circuit configured to selectively demodulate outputs of the first and second frequency-converters.

8. A receiving apparatus comprising:
a first reception circuit configured to receive a radio wave of a first frequency band from a tuning circuit;
a second reception circuit, including a first amplifier part, and configured to receive a radio wave of a second frequency band lower in frequency than the first frequency band; and
a voltage generating means for generating a tuning voltage to be supplied to the tuning circuit in a first selection state in which the radio wave of the first frequency band is received, and a bias voltage to be supplied to the first amplifier part in a second selection state in which the radio wave of the second frequency band is received,
wherein the voltage generating means includes a voltage generator configured to generate and output the tuning voltage and the bias voltage to an output route, and a switching circuit configured to switch the output route to couple to the first amplifier circuit in the second selection state.

9. The receiving apparatus as claimed in claim 8, wherein
the voltage generator includes a register part including a plurality of registers configured to store data, a switching means for switching and outputting the data of the register part, and a digital-to-analog converter configured to output a voltage by subjecting output data of the switching means to a digital-to-analog conversion; and
the switching means outputs first data stored in a first register of the register part to the digital-to-analog converter in the first selection state in order to generate the tuning voltage, and outputs second data stored in a second register of the register part to the digital-to-analog converter in the second selection state in order to generate the bias voltage.

10. The receiving apparatus as claimed in claim 9, wherein the voltage generator further includes a computing unit configured to compute data based on third data stored in a third register of the register part in order to cause the digital-to-analog converter to generate the tuning voltage.

11. The receiving apparatus as claimed in claim 9 or 10, wherein the voltage generator includes a storage means rewritably prestoring the data to be stored in the register part, for setting the prestored data to the register part in response to an instruction.

12. The receiving apparatus as claimed in claim 11, wherein the storage means sets the prestored data to the register part when a power of the semiconductor integrated circuit is turned ON or when resetting the semiconductor integrated circuit.

13. The receiving apparatus as claimed in claim 11, further comprising:
a processor configured to generate the instruction.

14. The receiving apparatus as claimed in any of claims 8 to 13, wherein
the radio wave of the first frequency band is a FM broadcast wave, and the first reception circuit receives the radio wave received by an antenna via the tuning circuit; and
the radio wave of the second frequency band is an AM broadcast wave, and the second reception circuit receives the radio wave received by the antenna via a bandpass filter at the first amplifier part.

15. The receiving apparatus as claimed in claim 14, wherein
the first reception circuit includes a second amplifier part configured to amplify the radio wave of the first frequency band, and a first frequency converter configured to frequency-convert an output of the second amplifier part into a first intermediate frequency signal;
the second reception circuit frequency-converts an output of the first amplifier part into a second intermediate frequency signal;and
the receiving apparatus further comprises:
a demodulating circuit configured to selectively demodulate outputs of the first and second frequency-converters.
